# EUROPEAN PATENT APPLICATION

(11) **EP 4 258 187 A1**
(43) Date of publication of application: **11.10.2023**
(21) Application number: 22216656.3
(22) Date of filing: 23.12.2022
(51) Int. Cl.: G06N 20/00, G06F 21/14

(54) **PRE-TRAINING SERVICE SYSTEM AND SERVICE PROVIDING METHOD BASED ON PRE-TRAINING SERVICE SYSTEM**

(30) Priority: 06.04.2022 CN 202210353465
(71) Applicant: Alibaba Damo (Hangzhou) Technology Co., Ltd., Hangzhou City Zhejiang Province (CN)
(72) Inventor: MEN, Rui, Hangzhou City (CN); ZHOU, Chang, Beijing (CN); WANG, Peng, Beijing (CN); ZHANG, Yichang, Beijing (CN); LIN, Junyang, Beijing (CN); YANG, An, Beijing (CN); LI, Yong, Beijing (CN); LIN, Wei, Hangzhou City (CN); DING, Ming, Beijing (CN); ZOU, Xu, Beijing (CN); DU, Zhengxiao, Beijing (CN); TANG, Jie, Beijing (CN); YANG, Hongxia, Beijing (CN); Zhou, Jingren, Hangzhou City (CN)
(74) Representative: Finnegan Europe LLP

(57) **Abstract**

A pre-training service system is provided. The pre-training service system includes: a producer service module configured to provide a model producer with a model pre-training process for a pre-training dataset and generate a corresponding pre-training model; an optimizer service module configured to optimize the pre-training model according to a fine-tuning dataset provided by a model optimizer and obtain an optimized model; and a consumer service module configured to provide a model consumer with a service interface for the pre-training model or the optimized model, wherein the pre-training model or the optimized model is configured to perform inference on data provided by the model consumer and output a model prediction result.

## Description

### CROSS REFERENCE TO RELATED APPLICATIONS

The disclosure claims the benefits of priority to Chinese Application No. 202210353465 .X, filed April 6, 2022.

### TECHNICAL FIELD

The present disclosure relates to deep learning, and in particular, to a pre-training service system and a service providing method based on a pre-training service system.

### BACKGROUND

In the background of the rapid development of artificial intelligence (AI) technologies, various large-scale pre-training models emerge. Capabilities (e.g., comprehension, generation, and retrieval) of the pre-training models have been applied to various industries, which has achieved remarkable success. However, due to a relatively high threshold for using the pre-training models, there is an urgent problem to be resolved to reduce the difficulty of use for providing more users with a platform through which the pre-training models can be used through simple operations. Moreover, because of the strong capabilities of comprehension, generation, and retrieval, it should also be considered to avoid the abuse of the pre-training models.

### SUMMARY OF THE DISCLOSURE

Embodiments of the present disclosure provide a pre-training service system. The pre-training service system includes: a producer service module configured to provide a model producer with a model pre-training process for a pre-training dataset and generate a corresponding pre-training model; an optimizer service module configured to optimize the pre-training model according to a fine-tuning dataset provided by a model optimizer and obtain an optimized model; and a consumer service module configured to provide a model consumer with a service interface for the pre-training model or the optimized model, wherein the pre-training model or the optimized model is configured to perform inference on data provided by the model consumer and output a model prediction result.

Embodiments of the present disclosure provide a service providing method based on a pre-training service system. The pre-training service system includes a producer service module, an optimizer service module, and a consumer service module. The method includes: acquiring identity information of a target user accessing the pre-training service system, to determine a preset user type to which the target user belongs; and opening a service module matching the preset user type to which the target user belongs to the target user. When the target user is a model producer, the producer service module is opened to the target user, wherein the producer service module is configured to provide the model producer with a model pre-training process for a pre-training dataset, and produce a corresponding pre-training model; when the target user is a model optimizer, the optimizer service module is opened to the target user, wherein the optimizer service module is configured to optimize the pre-training model according to a fine-tuning dataset provided by the model optimizer, and obtain an optimized model; and when the target user is a model consumer, the consumer service module is opened to the target user, wherein the consumer service module is configured to provide the model consumer with a service interface for the pre-training model or the optimized model, and the pre-training model or the optimized model is configured to perform inference on data provided by the model consumer and output a model prediction result.

Embodiments of the present disclosure provide a non-transitory computer-readable storage medium that stores a set of instructions that is executable by one or more processors of an apparatus to cause the apparatus to initiate a method for performing a service providing method based on a pre-training service system. The pre-training service system includes a producer service module, an optimizer service module, and a consumer service module. The method includes acquiring identity information of a target user accessing the pre-training service system, to determine a preset user type to which the target user belongs; and opening a service module matching the preset user type to which the target user belongs to the target user. When the target user is a model producer, the producer service module is opened to the target user, wherein the producer service module is configured to provide the model producer with a model pre-training process for a pre-training dataset, and produce a corresponding pre-training model; when the target user is a model optimizer, the optimizer service module is opened to the target user, wherein the optimizer service module is configured to optimize the pre-training model according to a fine-tuning dataset provided by the model optimizer, and obtain an optimized model; and when the target user is a model consumer, the consumer service module is opened to the target user, wherein the consumer service module is configured to provide the model consumer with a service interface for the pre-training model or the optimized model, and the pre-training model or the optimized model is configured to perform inference on data provided by the model consumer and output a model prediction result.

### BRIEF DESCRIPTION OF THE DRAWINGS

Embodiments and various aspects of the present disclosure are illustrated in the following detailed description and the accompanying figures. Various features shown in the figures are not drawn to scale.
**FIG. 1** is a schematic structural diagram of a pre-training service system according to some embodiments of the present disclosure.
**FIG. 2** is an exemplary flowchart of a service providing method based on a pre-training service system according to some embodiments of the present disclosure.
**FIG. 3** is a schematic structural diagram of an electronic device according to some embodiments of the present disclosure.
**FIG. 4** is a schematic diagram of a service providing apparatus based on a pre-training service system according to some embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims. Particular aspects of the present disclosure are described in greater detail below. The terms and definitions provided herein control, if in conflict with terms and/or definitions incorporated by reference.

The complication of the application scenarios of the AI technologies leads to differences in different application scenarios in aspects such as task objectives, training data, and problem settings. Therefore, a general pre-training model is proposed to enable the user to perform fine tuning based on the general pre-training model to obtain an optimized model that meets a specific application scenario. An application mode in which the general pre-training model is provided can reduce the demand for training data, improve training efficiency, and enable more small and medium enterprises to have the capability to obtain optimized models that meet specific application scenarios, thereby promoting the application and popularization of the AI technologies. In addition, the user may alternatively select a different pre-training model or an optimized model that serves a specific scenario according to an application scenario and use their own data to perform inference, to acquire a model output result based on the selected pre-training model or optimized model.

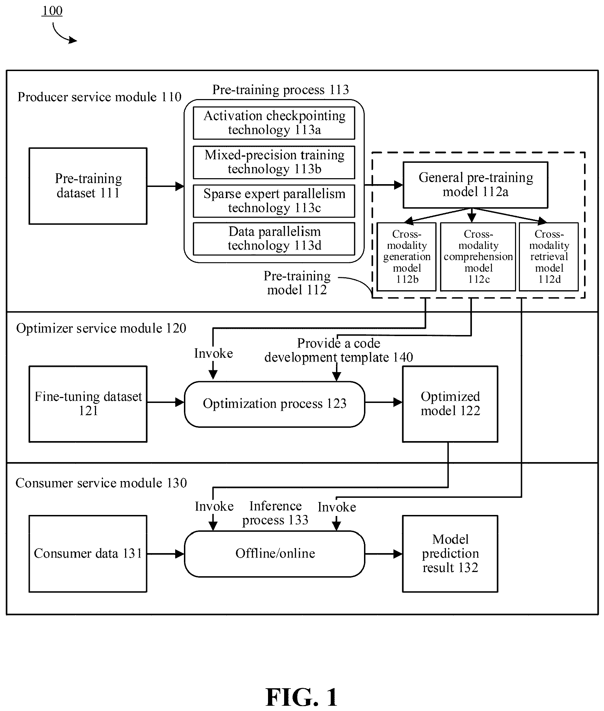

To facilitate providing different types of pre-training model-based services for users with different types of identities, some embodiments of the present disclosure provide a pre-training service system. **FIG. 1** shows a schematic structural diagram of a pre-training service system 100 according to some embodiments of the present disclosure. The pre-training service system 100 includes a producer service module 110, an optimizer service module 120, and a consumer service module 130. The producer service module 110 is configured to provide a model producer with a model pre-training function for a pre-training dataset 111, and generate a corresponding pre-training model 112. The optimizer service module 120 is configured to optimize 123 the pre-training model 112 according to a fine-tuning dataset 121 provided by a model optimizer, and obtain an optimized model 122. The consumer service module 130 is configured to provide a model consumer with a service interface for the pre-training model 112 or the optimized model 122, or both the pre-training model 112 and the optimized model 122. The pre-training model 112 or the optimized model 122 is configured to perform inference 133 on consumer data 131 provided by the model consumer and output a model prediction result 132.

The model producer refers to an algorithm developer on the pre-training service system side, and is the producer of the pre-training model 112. In some embodiments of the present disclosure, the model producer starts distributed pre-training based on the pre-training dataset 111 by using the model pre-training function provided by the pre-training service system 100 and generates the pre-training model 112. The pre-training model 112 is the basis for the pre-training service system 100 to provide AI-related services, and other pre-training models are all obtained after modification of the pre-training model 112.

In some embodiments of the present disclosure, during pre-training of the pre-training model 112, an activation checkpointing technology 113a can be applied on the model pre-training function. Several checkpoints are set in a network, and some temporarily useless intermediate results in the forward process are discarded to reduce memory occupation. If these intermediate results are required in the subsequent process, the corresponding intermediate results are restored from the latest checkpoint through additional forward calculations, which not only saves memory of GPU (graphic processing unit), but also avoids the cumbersome process of performing calculations from scratch, thereby reducing the memory occupation caused by the intermediate activation during training of the pre-training model.

In some embodiments, a mixed-precision training technology 113b is used in the pre-training process 113. Deep learning is performed on the training of the pre-training model through a 16-bit floating-point number (FP16) to reduce the memory required for training and improve the calculation speed. In addition, technologies such as sparse expert parallelism 113c and data parallelism 113d are also applied on the pre-training service system 100 to improve the calculation efficiency of the pre-training process 113, thereby ensuring low carbon and environmental protection of the pre-training process 113. The sparse expert parallelism technology 113b refers to the sparse gated mixture of experts (MoE), which splits a large model into a plurality of small models, and each small model retains independent parameters. In the model pre-training process 113, for one sample, it is not necessary to perform calculation by using all the small models. Instead, one or more appropriate small models are selected through a preset policy, and corresponding parameters are selected for calculation. Although the total quantity of pre-training parameters in this solution is very large, only a small part of the pre-training parameters is activated, which reduces memory usage during calculation.

In some embodiments of the present disclosure, to make the generated pre-training model 112 have more diversified capabilities and have higher versatility, a form of multi-modality pre-training is adopted in the pre-training process of the pre-training model 112. Modality refers to an existence form of data, such as text, audio, image, video, and other file formats.

In some embodiments of the present disclosure, in the pre-training process 113 of the pre-training model 112, the pre-training model 112 may use a plurality of tasks including: language modeling, text denoising, image captioning, image-based text denoising, and etc. In addition, in the pre-training process 113, the capability and versatility of the finally obtained pre-training model 112 is influenced by the scale and the wideness of fields of the pre-training dataset 111. In some embodiments of the present disclosure, in the pre-training process of the pre-training model 112, ultra-large-scale single-modality and multi-modality datasets covering a plurality of fields are used as the pre-training dataset 111 of the pre-training model 112. By using the multi-modality pre-training and expanding the scale and coverage of the pre-training dataset 111, the pre-training model 112 can simultaneously have the single-modality and multi-modality capabilities (e.g., comprehension and generation), and have good adaptability for tasks in different fields, thereby improving the versatility of the pre-training model 112.

Corresponding to the model developer, the model optimizer refers to a user in other fields who intends to obtain, based on the pre-training model 112, an optimized model 122 adapted to the field to which the model optimizer belongs. In some embodiments of the present disclosure, the pre-training service system 100 shown in **FIG. 1** provides the optimizer service module 120 to the model optimizer. The optimizer service module 120 is configured to optimize the pre-training model 112 generated by the producer service module 110, according to the fine-tuning dataset 121 provided by the model optimizer, and obtain an optimized model 122.

In some embodiments of the present disclosure, the model pre-training function provided by the pre-training service system 100 is used to obtain a general pre-training model 112a through training according to the pre-training dataset 111. Subsequently, the producer service module 110 generates, according to the general pre-training model 112a, a dedicated pre-training model corresponding to a downstream task instructed by the model producer. That is, according to atomic capabilities of the general pre-training model, the model producer instructs the pre-training service system 100 to generate a dedicated pre-training model having a special use and applicable to a certain type of downstream task, based on the general pre-training model 112a. Atomic capabilities refers to basic capabilities of a model and can be used alone for handling downstream tasks. The atomic capabilities of the general pre-training model 112a include a cross-modality generation capability, a cross-modality comprehension capability, and a cross-modality retrieval capability. Correspondingly, dedicated pre-training models may include: a cross-modality generation model 112b, a cross-modality comprehension model 112c, and a cross-modality retrieval model 112d. The pre-training model 112 includes: a general pre-training model 112a and a dedicated pre-training model (e.g., such as one or more of dedicated pre-training models 112b, 112c, and 112d).

In some embodiments of the present disclosure, the producer service module 110 in the pre-training service system 100 is further configured to generate a code development template 140 corresponding to the dedicated pre-training model (e.g., such as one or more of dedicated pre-training models 112b, 112c, or 112d). The code development template corresponding to the dedicated pre-training model is provided to the model optimizer by the pre-training service system 100 through the optimizer service module 120.

A pre-training model 112 includes two parts: model structure codes and model parameters. The model structure codes refer to codes for constructing the pre-training model 112. A model may be regarded as a hypothesis, model parameters are the specific adjustments made to the hypothesis according to a specific dataset, therefore, model functions can be defined by the values of the model parameters.

The model optimizer sends a model modification instruction to the pre-training service system 100 by referring to the code development template according to an optimization requirement of the model optimizer. In some embodiments, the optimizer service module 120 in the pre-training service system 100 provides a model modification interface to the model optimizer, and the model optimizer makes reference to the code development template to use the model modification interface to send a model modification instruction for the model structure codes and/or model parameters of the dedicated pre-training model (e.g., such as one or more of dedicated pre-training models 112b, 112c, or 112d). The optimizer service module 120 is configured to modify the corresponding model structure codes and/or model parameters according to the model modification instruction, and then start training for the modified pre-training model according to the fine-tuning dataset 121 provided by the model optimizer, to acquire the optimized model 122.

In some embodiments of the present disclosure, a model optimizer who intends to quickly try the pre-training model 112 only needs to modify parameters of an example provided in the code development template. Data in the field (fine-tuning dataset 121) can be used to start the multi-machine and multi-card distributed training tasks through the pre-training service system 100 and to generate optimized model parameters belonging to the model optimizer. The optimized model 122 can be generated by combining the optimized model parameters with the model structure codes of the pre-training model 112.

In some embodiments of the present disclosure, if the model optimizer intends to further optimize the pre-training model 112, the pre-training service system 100 may further provide an example for optimizing a pre-training model for applying to other fields. The optimizer may issue a modification instruction to the pre-training model 112 according to a requirement of the optimizer by referring to the foregoing example and input the fine-tuning dataset 121 in the field. Then, the pre-training service system 100 is configured to start the distributed training task, and generate the corresponding optimized model parameters, so as to acquire the optimized model 122.

The optimized model 122 is trained based on the fine-tuning dataset 121 provided by the model optimizer, and the model optimizer may perform optimization and fine tuning 123 on the model 112 according to a requirement of the model optimizer. Therefore, the optimized model 122 is applicable to the field to which the model optimizer belongs. In addition, in the process of model optimization 123 by using the pre-training service system 100, the model optimizer does not need to pay attention to the implementation details (e.g., data IO (input/output) and data parallelism) of the development process of the pre-training model 112, the distributed training of the pre-training model 112, the evaluation process of the pre-training model 112, and the like, but only needs to modify the corresponding model structure codes or model parameters according to the code development template provided by the pre-training service system 100 and start the model training. Then, an optimized model 122 applicable to the industry to which the model optimizer belongs can be acquired. The pre-training service system 100 reduces the difficulty to optimize the pre-training model 112, so that a model optimizer without the ability to develop a pre-training model 112 can also obtain an optimized model 122 through the pre-training service system 100.

In some embodiments of the present disclosure, matured industry solutions (such as copywriting generation, search recall, clothing design, intelligent dialog, and financial question and answer, etc.) may be used as examples and provided by the pre-training service system 100 to other users (including other developers) for reference. In addition to making reference to the code development template to send a modification instruction to the pre-training model 112, the model optimizer may further make reference to industry solutions to modify the model.

In some embodiments of the present disclosure, the pre-training service system 100 further provides a sharing interface. The model optimizer may upload the optimization process 123 of the pre-training model 112 to the pre-training service system 100 through the sharing interface. The optimization process 123 is shared as a new example and provided to other model optimizers as an optimization reference. Based on the case sharing function, the application scope of the pre-training model 112 can be expanded, and the difficulty of using the pre-training service system is further reduced.

In the present disclosure, users of the pre-training service system 100 further include a model consumer. The model consumer is a user who intends to use their own data for inference through the pre-training model or the optimized model, to acquire a model prediction result. The pre-training service system 100 provides the model consumer with a service interface for the pre-training model 112 and/or the optimized model 122 through the consumer service module 130. The pre-training model 112 or the optimized model 122 is configured to perform inference 133 on data 131 provided by the model consumer and output a model prediction resuabstlt 132. As shown in **FIG. 1****,** the model consumer may invoke the pre-training model 112 or the optimized model 122 to perform inference 133. In some embodiments, the inference process 133 may be offline. The pre-training service system 100 deploys, through the service interface, the pre-training model 112 or the optimized model 122 selected by the model consumer on a device corresponding to the model consumer, for performing offline inference on the data 131 provided by the model consumer. In some embodiments, the pre-training model 112 or the optimized model 122 may alternatively be deployed as a low-latency online service, and a consumer directly inputs consumer data 131 in a web page provided by the pre-training service system 100. The web page is equivalent to the service interface provided by the pre-training service system 100. After the consumer data 131 is acquired, the corresponding pre-training model 112 or the optimized model 122 is invoked to perform online inference, and a model prediction result 132 is obtained. The model prediction result 132 is provided in a form of a web page to the model consumer.

In some embodiments of the present disclosure, the pre-training service system 100 can provide users with a variety of single-modality or cross-modality AI services based on the cross-modality generation, cross-modality retrieval, and cross-modality comprehension capabilities of the pre-training model 112.

For example, a news event may be displayed in various forms such as text, an image, or a video. During information retrieval, if only single-modality data is retrieved, the acquired information content is greatly limited, and data of other modalities is required to enrich people's cognition of the same thing or event. In this case, cross-modality retrieval is required to realize the retrieval between data of different modalities. In some embodiments of the present disclosure, the pre-training service system 100 may acquire the video of the news event based on the cross-modality retrieval capability of the pre-training model 112 according to news information in a form of a picture inputted by the user.

In some embodiments of the present disclosure, the pre-training service system 100 may provide a clothing design service to the model consumer based on the cross-modality generation capability of the pre-training model 112. For example, the model consumer inputs "men's striped shirts" through the web page provided by the pre-training service system 100. Several clothing design pictures matching the word description of "men's striped shirts" can be generated by performing calculation on the target pre-training model in the field of clothing design provided by the pre-training service system 100. In the foregoing example, the cross-modality generation capability of the pre-training model 112 is used. In some embodiments, although the pre-training service system 100 provides users with cross-modality AI services, the pre-training service system 100 also has the capability to provide AI services based on a single modality. For example, when a consumer performs clothing design operations (e.g., inputs two clothing pictures of different styles) based on the offline inference function of the target pre-training model in the field of clothing design provided by the pre-training service system 100, after offline inference, the model consumer can obtain a result of the offline inference, that is, a clothing picture obtained by fusing the two clothing pictures of different styles.

In addition to the clothing design function, the pre-training service system 100 may further use the cross-modality retrieval, generation, and comprehension capabilities of the pre-training model 112 to perform training and inference related to word processing, for example, copywriting generation. For example, in the inference process 133 of a target pre-training model in the word processing field, when a picture of a latex pillow is inputted, and a target pre-training model in the word processing field provided by the pre-training service system 100 is used for inference, a promotional copywriting for the latex pillow can be obtained by using the cross-modality comprehension capability of the pre-training model 112. In addition, the pre-training service system 100 further uses the foregoing capabilities of the pre-training model 112 to realize the conversion from text to text and performs text denoising and language modeling during the conversion.

The pre-training model 112 plays a very important role in the service process of the pre-training service system 100, and users may invoke a target pre-training model through the pre-training service system 100. Because the pre-training model 112 has strong text and image generation capabilities, to avoid abuse of the pre-training model 112, a variety of defense mechanisms for preventing the abuse of the pre-training model 112 are further set in the pre-training service system 100, and the defense mechanisms are also applicable to avoiding abuse of the optimized model 122.

As described above, the pre-training model 112 or optimized model 122 includes two parts: model structure codes and model parameters. For the model structure codes, according to materials such as a general industry framework, the user may reversely reproduce the complete model structure codes and acquire the pre-training model or optimized model by combining the reproduced model structure codes with model parameters acquired in other manners, which is not conducive to the management and control of the application of the pre-training model or optimized model. Because the model parameters define functions of the model, the protection of the model parameters and the protection of the model structure codes are equally important for the pre-training service system. During protection for the pre-training model as a whole, it is necessary to take both the protection of the model structure codes and the protection of the model parameters into consideration.

In some embodiments of the present disclosure, the pre-training model 112 and/or optimized model 122 includes obfuscated model structure codes and obfuscated model parameters. The obfuscated model structure codes and the obfuscated model parameters are pre-generated after associated obfuscation processing is performed on original model structure codes and original model parameters. By perform associated obfuscation on the model structure codes and the model parameters, although the obfuscated model structure codes and the obfuscated model parameters have functions equivalent to those of the original model structure codes and the original model parameters, reproduction cannot be implemented in form, such that abuse of the pre-training model is avoided. In some embodiments, model functions can be defined by the values of the model parameters.

In some embodiments, the associated obfuscation processing may include following steps. Based on performing a conventional obfuscation operation on at least a part of codes in the original model structure codes of the pre-training model, at least one calculation process in the model structure codes is modified, and some parameters corresponding to the calculation process in the model parameters are cooperatively modified, so that an operation result of an obfuscated pre-training model formed by combining the modified obfuscated model structure codes and the correspondingly modified obfuscated model parameters is consistent with an operation result of an original pre-training model before the obfuscation. The conventional obfuscation operation may include using methods (such as removing comments, injecting irrelevant code, and renaming functions, classes, and variables) to reduce code readability and increase the cracking threshold, meanwhile ensure that the operation result after the obfuscation is consistent with the operation result before the obfuscation. Because the obfuscation process is coordinated with modification and adjustment of the model parameters, it is difficult to locate the specific location in which the obfuscation occurs. Therefore, the method further increases the difficulty of reproducing the model structure codes and realizes the protection of the model structure codes.

The modifying at least one calculation process in the model structure codes includes: performing forward obfuscation processing on at least a part of codes in the original model structure codes having not been modified, and cooperatively performing reverse obfuscation processing on model parameters related to the part of codes modified in the original model parameters, to increase the difficulty of reproducing the pre-training model without changing the operation result of the pre-training model.

For example, the forward obfuscation processing may include: subtracting a vector during calculation of the model structure codes based on performing a conventional obfuscation operation on at least a part of codes in the original model structure codes of the pre-training model. The corresponding reverse obfuscation processing may include: adding the vector to the corresponding part in the model parameters for compensation, so that an operation result of the obfuscated pre-training model is consistent with an operation result of the original pre-training model before the obfuscation.

To further improve the security of the pre-training model, in some embodiments of the present disclosure, the model parameters are stored in the storage space managed by the pre-training service system. When the target user invokes a target pre-training model or a target optimized model, corresponding model parameters are acquired from the storage space according to a reading path indicated in an invoking request of the target user. The storage space may be an object storage (cloud storage) managed by the pre-training service system. Alternatively, the storage space may be directly provided by the pre-training service system. The model parameters may be obfuscated model parameters. After the pre-training service system acquires the obfuscated model parameters, the obfuscated model parameters are combined with the corresponding obfuscated model structure codes to acquire a target pre-training model or a target optimized model.

Different types of users of the pre-training service system have different type of identities, including: a model developer, a model optimizer, and a model consumer. Different types of users have different requirements on the pre-training service system to complete different tasks. Therefore, if all usage permissions are open to all types of users on the pre-training service system, it will not be conducive to the protection of the pre-training model.

To provide the corresponding model usage permission based on the user identity, the pre-training service system 100 further provides the following services.

The optimizer service module 120 is further configured to identify whether the model optimizer has a permission to invoke the obfuscated model parameters corresponding to the pre-training model. If the model optimizer has the permission to invoke the obfuscated model parameters, the obfuscated model parameters are combined with the obfuscated model structure codes to acquire the pre-training model 112. The pre-training model 112 is provided to the model optimizer.

The consumer service module 130 is further configured to identify whether the model consumer has a permission to invoke the obfuscated model parameters corresponding to the pre-training model 112 or the optimized model 122. If the model consumer has the permission to invoke the obfuscated model parameters, the obfuscated model parameters are combined with the obfuscated model structure codes to acquire the pre-training model 112 or the optimized model 122. The pre-training model 112 or the optimized model 122 is provided to the model consumer.

For example, the optimizer service module 120 in the pre-training service system 100 identifies whether a model optimizer has the permission to invoke the model parameters of the target pre-training model selected by the model optimizer. The model parameters may be obfuscated model parameters. If the model optimizer has the permission to invoke the foregoing obfuscated model parameters, after the system acquires the obfuscated model parameters, the obfuscated model parameters are combined with the corresponding obfuscated model structure code, and a target pre-training model can be obtained. The target pre-training model is provided to the model optimizer, for the model optimizer to optimize the target pre-training model. The identification process for the model consumer is similar to the identification process of the model optimizer described above.

In some embodiments, during operation of the pre-training service system 100, in addition to the model structure codes and model parameters of the pre-training model 112 and the optimized model 122, to invoke and use the pre-training model 112 or the optimized model 122, model access codes and model training inference codes for any pre-training model 112 or optimized model 122 are further run in the pre-training service system 100. These codes are decoupled from the model structure codes, to obtain independent model access codes and model training inference codes. The model access codes and the model structure codes are encrypted, so as to avoid exposure of the storage location of the pre-training model 112 or optimized model 122 or leakage of the model structure codes, improve the security of the pre-training service system 100, and avoid abuse of the pre-training model 112 or optimized model 122. The model training inference codes may be maintained in plaintext by the pre-training service system.

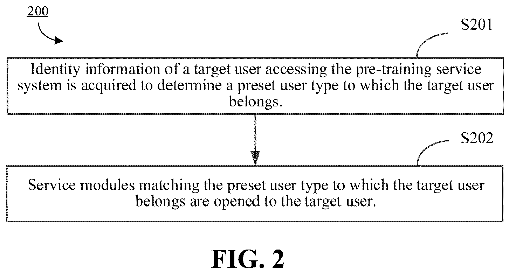

In some embodiments of the present disclosure, a service providing method based on a pre-training service system is provided. **FIG. 2** illustrates an exemplary flowchart of a service providing method 200 based on a pre-training service system according to some embodiments of the present disclosure. The method 200 may be applied to the pre-training service system 100 shown in **FIG. 1****.** As shown in **FIG. 1****,** the pre-training service system 100 may include a producer service module 110, an optimizer service module 120, and a consumer service module 130. A model maintained by the pre-training service system 100 includes obfuscated model structure codes and obfuscated model parameters. The obfuscated model structure codes and the obfuscated model parameters are pre-generated after associated obfuscation processing is performed on original model structure codes and original model parameters. Referring to **FIG. 2****,** the method 200 may include steps S201 and S202.

At step S201, identity information of a target user accessing the pre-training service system is acquired to determine a preset user type to which the target user belongs.

For example, the pre-training service system may determine the identity information of the target user according to a login account of the target user, to determine the preset user type to which the target user belongs. Alternatively, the pre-training service system may determine the identity information of the target user according to an invoking request of the target user.

At step S202, a service module matching the preset user type to which the target user belongs is opened to the target user.

When the target user is a model producer, the producer service module is opened to the target user. The producer service module is configured to provide the model producer with a model pre-training function for a pre-training dataset and produce a corresponding pre-training model.

When the target user is a model optimizer, the optimizer service module is opened to the target user. The optimizer service module is configured to optimize the pre-training model according to a fine-tuning dataset provided by the model optimizer and obtain an optimized model.

When the target user is a model consumer, the consumer service module is opened to the target user. The consumer service module is configured to provide the model consumer with a service interface for the pre-training model and/or the optimized model, and the pre-training model or the optimized model is configured to perform inference on data provided by the model consumer and output a model prediction result.

The model pre-training function is used for performing training according to the pre-training dataset to obtain a general pre-training model. The pre-training model includes at least one of the general pre-training model or a dedicated pre-training model. The dedicated pre-training model is generated by the producer service module according to the general pre-training model and that corresponds to a downstream task instructed by the model producer.

In some embodiments of the present disclosure, the service providing method based on a pre-training service system further includes: generating a code development template corresponding to the dedicated pre-training model; providing the code development template to the model optimizer; and modifying model structure codes and/or model parameters of the dedicated pre-training model according to a model modification instruction issued by the model optimizer.

For example, in some embodiments of the present disclosure, it is assumed that a model optimizer (e.g., a target user A) in the field of clothing design needs to perform modification based on a target pre-training model, to acquire an optimized model for the target field (e.g., the field of clothing design). It is assumed that the target pre-training model is the pre-training model 112 shown in **FIG. 1****.** In this case, after the target user A in the field of clothing design logs in to the pre-training service system 100, the pre-training service system acquires identity information of the target user and confirms that the target user is a model optimizer. The pre-training service system 100 opens the optimization service module 120 to the target user A. The target user A may make reference to the code development template provided by the pre-training service system 100 to modify the parameters of the pre-training model 112 and use data in the fine-tuning dataset 121 of the target user A in the field of clothing design to train the modified pre-training model, to acquire an optimized model 122. Alternatively, the target user A may choose to use the optimization permission granted by the pre-training service system 100 to issue a modification instruction through a modification interface provided by the pre-training service system 100 to instruct the pre-training service system 100 to modify the corresponding model structure codes. Similarly, the target user A uses the fine-tuning dataset 121 to start model training, and finally acquires an optimized model 122. The optimized model 122 is applicable to the field of clothing design.

In some embodiments of the present disclosure, if the pre-training service system 100 determines that a user type of a target user B is a model consumer, the pre-training service system 100 opens the consumer service module 130 to the target user B. The consumer service module 130 is configured to provide the model consumer with a service interface for the pre-training model 112 and/or the optimized model 122. The pre-training model 112 or the optimized model 122 is configured to perform inference on data provided by the model consumer and output a model prediction result 132. For example, when the target user B intends to acquire a clothing design scheme of a specific theme through the AI service provided by the pre-training service system 100, the target user B requests to invoke a target optimized model in the field of clothing design, that is, the optimized model 122 obtained by performing optimization based on the pre-training model 112 by the developer (i.e., the target user A), in the previous examples. The consumer service module 130 of the pre-training service system 100 provides, through the service interface, the target user B with the model usage permission to use the optimized model 122 for inference to acquire a model prediction result 132. Specifically, target user B may use an inference service deployed online in the pre-training service system 100 to input "men's striped shirts", invoke the optimized model 122 to perform online inference calculation, and acquire a model prediction result 132, for example, several clothing design pictures matching the word description of "men's striped shirts". In some embodiments, the inference function may alternatively be set as an offline function. For example, the optimized model 122 is deployed on a device corresponding to the model consumer, that is, user B through the service interface provided by the consumer service module 130 of the pre-training service system 100, for performing offline inference on the data provided by model consumer B.

Similarly, the model consumer may alternatively invoke optimized models 122 in different fields acquired by model optimizers in fields such as the word processing field and the financial field in the same optimization manner as that in the foregoing embodiments and perform inference to acquire model prediction results 132 in different fields.

Because the model optimizer needs to provide the optimized model to other users for use after optimizing the target pre-training model through the pre-training service system, in some embodiments of the present disclosure, the pre-training service system further provides the following function: storing parameters of the optimized model produced by the pre-training service system in the storage space managed by the pre-training service system. Uploaded optimized model parameters may be invoked in the manner described above according to a reading path provided by the target user. For example, in the foregoing example, after obtaining the optimized model 122, the target user A stores the model parameters of the optimized model 122 in the storage space managed by the pre-training service system 100. When the target user B intends to invoke the optimized model 122, the pre-training service system 100 may invoke the model parameters of the optimized model 122 through the reading path provided by the user B. In some embodiments, the foregoing model parameters may be obfuscated model parameters, and the optimized model 122 can be obtained by combining the obfuscated model parameters and the corresponding obfuscated model structure codes. The obfuscated model structure codes and the obfuscated model parameters are pre-generated after associated obfuscation processing is performed on original model structure codes and original model parameters of the optimized model 122. For the specific method for the foregoing associated obfuscation processing, reference may be made to the related introduction about the pre-training service system above.

In some embodiments of the present disclosure, the pre-training service system is further configured to identify whether the target user has the permission to invoke the obfuscated model parameters. If the target user has the permission to invoke the obfuscated model parameters, the obfuscated model parameters and the corresponding obfuscated model structure codes are combined to acquire a target pre-training model or a target optimized model. The model parameters are usually stored in a form of a ckpt format file (i.e., checkpoint file). To ensure that the ckpt format file of model parameters cannot be used independently from the pre-training service system, a license server may be introduced to identify whether the target user has a permission to invoke the model parameters (e.g., ckpt format file) provided by the pre-training service system. If the target user has the permission, the acquired model parameters and the model structure codes are combined to acquire the target pre-training model.

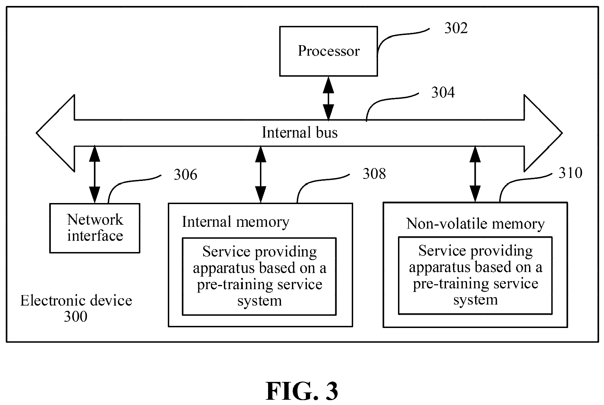

**FIG. 3** is a schematic structural diagram of an electronic device 300 according to some embodiments of the present disclosure. Referring to **FIG. 3****,** at a hardware level, the electronic device 300 includes a processor 302 (which can include one or more processors, such as a CPU, GPU, NPU, a hardware accelerator, etc.), an internal bus 304, a network interface 306, an internal memory 308, and a non-volatile memory 310. In some embodiments, the electronic device 300 may further include hardware required for other functions. The processor 302 is configured to read a corresponding computer program from the non-volatile memory 310 into the internal memory 308 and then execute the computer program, to provide a service providing apparatus based on a pre-training service system at a logic level. In some embodiments, in addition to a software implementation, other implementations are not excluded, for example, logic devices or a software-hardware combination. That is, execution entities of the following processing procedures are not limited to logic units and may alternatively be hardware or logic devices.

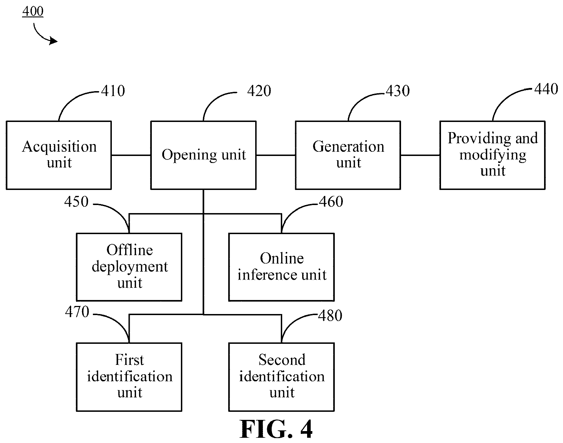

Corresponding to the embodiment of the foregoing method, the present disclosure further provides a service providing apparatus based on a pre-training service system. **FIG. 4** is a schematic diagram of a service providing apparatus 400 based on a pre-training service system according to some embodiments of the present disclosure. The pre-training service system includes a producer service module, an optimizer service module, and a consumer service module. A model maintained by the pre-training service system includes obfuscated model structure codes and obfuscated model parameters. The obfuscated model structure codes and the obfuscated model parameters are pre-generated after associated obfuscation processing is performed on original model structure codes and original model parameters. The apparatus 400 includes an acquisition unit 410 and an opening unit 420. The acquisition unit 410 is configured to acquire identity information of a target user accessing the pre-training service system, to determine a preset user type to which the target user belongs.

The opening unit 420 is configured to open a service module matching the preset user type to which the target user belongs to the target user.

When the target user is a model producer, the producer service module is opened to the target user. The producer service module is configured to provide the model producer with a model pre-training function for a pre-training dataset and produce a corresponding pre-training model.

When the target user is a model optimizer, the optimizer service module is opened to the target user. The optimizer service module is configured to optimize the pre-training model according to a fine-tuning dataset provided by the model optimizer and obtain an optimized model.

When the target user is a model consumer, the consumer service module is opened to the target user. The consumer service module is configured to provide the model consumer with a service interface for the pre-training model and/or the optimized model, and the pre-training model or the optimized model is configured to perform inference on data provided by the model consumer and output a model prediction result.

In some embodiments, the model pre-training function is used for performing training according to the pre-training dataset to obtain a general pre-training model. The pre-training model includes at least one of the general pre-training model or a dedicated pre-training model. The dedicated pre-training model is generated by the producer service module according to the general pre-training model and that corresponds to a downstream task instructed by the model producer.

In some embodiments, the service providing apparatus 400 based on a pre-training service system may further include a generation unit 430 and a providing and modifying unit 440.

The generation unit 430 is configured to generate a code development template corresponding to the dedicated pre-training model.

The providing and modifying unit 440 is configured to provide the code development template to the model optimizer and modify model structure codes and/or model parameters of the dedicated pre-training model according to a model modification instruction issued by the model optimizer.

In some embodiments, the service providing apparatus 400 based on a pre-training service system may further include an offline deployment unit 450 and an online inference unit 460.

The offline deployment unit 450 is configured to deploy the pre-training model or the optimized model on a device corresponding to the model consumer through the service interface, for performing offline inference on the data provided by the model consumer.

The online inference unit 460 is configured to acquire, through the service interface, the data provided by the model consumer, and invoke the pre-training model or the optimized model to perform online inference.

In some embodiments, the associated obfuscation processing includes performing forward obfuscation processing on at least a part of codes in the original model structure codes, and performing reverse obfuscation processing on model parameters related to the at least a part of codes in the original model parameters.

In some embodiments, the obfuscated model parameters are stored in a storage space managed by the pre-training service system.

In some embodiments, the service providing apparatus 400 based on a pre-training service system may further include a first identification unit 470 and a second identification unit 480.

The first identification unit 470 is configured to identify whether the model optimizer has a permission to invoke the obfuscated model parameters corresponding to the pre-training model. If the model optimizer has the permission to invoke the obfuscated model parameters, the obfuscated model parameters are combined with the obfuscated model structure codes to acquire the pre-training model, and the pre-training model is provided to the model optimizer.

The second identification unit 480 is configured to identify whether the model consumer has a permission to invoke the obfuscated model parameters corresponding to the pre-training model or the optimized model. If the model consumer has the permission to invoke the obfuscated model parameters, the obfuscated model parameters are combined with the obfuscated model structure codes to acquire the pre-training model or the optimized model, and the pre-training model or the optimized model is provided to the model consumer.

In some embodiments, the pre-training service system is configured to maintain independent model access codes and independent model training inference codes for the target pre-training model. The model structure codes and the model access codes are encrypted and then maintained by the pre-training service system. The model training inference codes are maintained in plaintext by the pre-training service system.

For the implementation processes of the functions and effects of the units in the foregoing apparatus, reference may be made to the implementation processes of corresponding steps in the foregoing method. Details are not described herein again.

The system, the apparatus, the module or the unit described in the foregoing embodiments may be implemented by a computer chip or an entity or implemented by a product having a certain function. A typical implementation device is a computer. A specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any devices of these devices.

In some embodiments, a computer-readable storage medium (e.g., non-transitory computer-readable medium) including instructions is also provided, and the instructions may be executed by a device, for performing the above-described methods. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM or any other flash memory, NVRAM, a cache, a register, any other memory chip or cartridge, and networked versions of the same. The device may include one or more processors (CPUs), an input/output interface, a network interface, and/or a memory.

It should be noted that, the relational terms herein such as "first" and "second" are used only to differentiate an entity or operation from another entity or operation, and do not require or imply any actual relationship or sequence between these entities or operations. Moreover, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items.

As used herein, unless specifically stated otherwise, the term "or" encompasses all possible combinations, except where infeasible. For example, if it is stated that a database may include A or B, then, unless specifically stated otherwise or infeasible, the database may include A, or B, or A and B. As a second example, if it is stated that a database may include A, B, or C, then, unless specifically stated otherwise or infeasible, the database may include A, or B, or C, or A and B, or A and C, or B and C, or A and B and C.

It is appreciated that the above described embodiments can be implemented by hardware, or software (program codes), or a combination of hardware and software. If implemented by software, it may be stored in the above-described computer-readable media. The software, when executed by the processor can perform the disclosed methods. The computing units and other functional units described in this disclosure can be implemented by hardware, or software, or a combination of hardware and software. One of ordinary skill in the art will also understand that multiple ones of the above described modules/units may be combined as one module/unit, and each of the above described modules/units may be further divided into a plurality of sub-modules/sub-units.

In the foregoing specification, embodiments have been described with reference to numerous specific details that can vary from implementation to implementation. Certain adaptations and modifications of the described embodiments can be made. Other embodiments can be apparent to those skilled in the art from consideration of the specification and practice of the invention disclosed herein. It is intended that the specification and examples be considered as exemplary only, with a true scope of the invention being indicated by the following claims. It is also intended that the sequence of steps shown in figures are only for illustrative purposes and are not intended to be limited to any particular sequence of steps. As such, those skilled in the art can appreciate that these steps can be performed in a different order while implementing the same method.

In the drawings and specification, there have been disclosed exemplary embodiments. However, many variations and modifications can be made to these embodiments. Accordingly, although specific terms are employed, they are used in a generic and descriptive sense only and not for purposes of limitation.

Also disclosed herein are the following clauses:
1. A system for providing pre-training service comprising: a producer service module configured to provide a model producer with a model pre-training process for a pre-training dataset and generate a corresponding pre-training model; an optimizer service module configured to optimize the pre-training model according to a fine-tuning dataset provided by a model optimizer and obtain an optimized model; and a consumer service module configured to provide a model consumer with a service interface for the pre-training model or the optimized model, wherein the pre-training model or the optimized model is configured to perform inference on data provided by the model consumer and output a model prediction result.
2. The system according to clause 1, wherein the model pre-training process is configured to perform training according to the pre-training dataset to obtain a general pre-training model, the pre-training model comprises at least one of the general pre-training model or a dedicated pre-training model, wherein the dedicated pre-training model is generated by the producer service module according to the general pre-training model and that corresponds to a downstream task instructed by the model producer.
3. The system according to clause 2, wherein the producer service module is further configured to: generate a code development template corresponding to the dedicated pre-training model; and the optimizer service module is further configured to: provide the code development template to the model optimizer; and modify model structure codes and/or model parameters of the dedicated pre-training model according to a model modification instruction issued by the model optimizer.
4. The system according to any of clauses 1 to 3, wherein the consumer service module is configured to: deploy the pre-training model or the optimized model on a device corresponding to the model consumer through the service interface, for performing offline inference on the data provided by the model consumer; or acquire, through the service interface, the data provided by the model consumer, and invoke the pre-training model or the optimized model to perform online inference.
5. The system according to any of clauses 1 to 4, wherein a model maintained by the pre-training service system comprises obfuscated model structure codes and obfuscated model parameters, the obfuscated model structure codes and the obfuscated model parameters being pre-generated after associated obfuscation processing is performed on original model structure codes and original model parameters.
6. The system according to clause 5, wherein the associated obfuscation processing comprises: performing forward obfuscation processing on at least a part of codes in the original model structure codes; and performing reverse obfuscation processing on model parameters related to the at least a part of codes in the original model parameters.
7. The system according to clause 5 or 6, wherein the obfuscated model parameters are stored in a storage space managed by the pre-training service system.
8. The system according to any of clauses 5 to 7, wherein the optimizer service module is further configured to: identify whether the model optimizer has a permission to invoke the obfuscated model parameters corresponding to the pre-training model; and if the model optimizer has the permission to invoke the obfuscated model parameters, combine the obfuscated model parameters with the obfuscated model structure codes to acquire the pre-training model, and provide the pre-training model to the model optimizer; and/or the consumer service module is further configured to: identify whether the model consumer has a permission to invoke the obfuscated model parameters corresponding to the pre-training model or the optimized model; and if the model consumer has the permission to invoke the obfuscated model parameters, combine the obfuscated model parameters with the obfuscated model structure codes to acquire the pre-training model or the optimized model, and provide the pre-training model or the optimized model to the model consumer.
9. The system according to any of clauses 1 to 8, wherein the pre-training service system is configured to maintain independent model access codes and independent model training inference codes for the pre-training model or the optimized model, wherein the model structure code and the model access codes are encrypted and maintained by the pre-training service system, and the model training inference code is maintained in plaintext by the pre-training service system.
10. A service providing method based on a pre-training service system, wherein the pre-training service system comprises a producer service module, an optimizer service module, and a consumer service module; and the method comprises: acquiring identity information of a target user accessing the pre-training service system, to determine a preset user type to which the target user belongs; and opening a service module matching the preset user type to which the target user belongs to the target user, wherein: when the target user is a model producer, the producer service module is opened to the target user, wherein the producer service module is configured to provide the model producer with a model pre-training process for a pre-training dataset, and produce a corresponding pre-training model; when the target user is a model optimizer, the optimizer service module is opened to the target user, wherein the optimizer service module is configured to optimize the pre-training model according to a fine-tuning dataset provided by the model optimizer, and obtain an optimized model; and when the target user is a model consumer, the consumer service module is opened to the target user, wherein the consumer service module is configured to provide the model consumer with a service interface for the pre-training model or the optimized model, and the pre-training model or the optimized model is configured to perform inference on data provided by the model consumer and output a model prediction result.
11. The method according to clause 10, wherein the model pre-training process comprises performing training according to the pre-training dataset to obtain a general pre-training model, the pre-training model comprising at least one of the general pre-training model or a dedicated pre-training model, wherein the dedicated pre-training model is generated by the producer service module according to the general pre-training model and that corresponds to a downstream task instructed by the model producer.
12. The method according to clause 11, further comprising: generating a code development template corresponding to the dedicated pre-training model; and providing the code development template to the model optimizer; and modifying model structure codes and/or model parameters of the dedicated pre-training model according to a model modification instruction issued by the model optimizer.
13. The method according to any of clauses 10 to 12, further comprising: deploying the pre-training model or the optimized model on a device corresponding to the model consumer through the service interface, for performing offline inference on the data provided by the model consumer; or acquiring, through the service interface, the data provided by the model consumer, and invoking the pre-training model or the optimized model to perform online inference.
14. The method according to any of clauses 10 to 13, wherein a model maintained by the pre-training service system comprises obfuscated model structure codes and obfuscated model parameters, the obfuscated model structure codes and the obfuscated model parameters being pre-generated after associated obfuscation processing is performed on original model structure codes and original model parameters; and the associated obfuscation processing comprises: performing forward obfuscation processing on at least a part of codes in the original model structure codes; and performing reverse obfuscation processing on model parameters related to the at least a part of codes in the original model parameters.
15. The method according to clause 14, wherein the obfuscated model parameters are stored in a storage space managed by the pre-training service system.
16. The method according to clause 15, further comprising: identifying whether the model optimizer has a permission to invoke the obfuscated model parameters corresponding to the pre-training model; and if the model optimizer has the permission to invoke the obfuscated model parameters, combining the obfuscated model parameters with the obfuscated model structure codes to acquire the pre-training model, and providing the pre-training model to the model optimizer; and/or identifying whether the model consumer has a permission to invoke the obfuscated model parameters corresponding to the pre-training model or the optimized model; and if the model consumer has the permission to invoke the obfuscated model parameters, combining the obfuscated model parameters with the obfuscated model structure codes to acquire the pre-training model or the optimized model, and providing the pre-training model or the optimized model to the model consumer.
17. The method according to any of clauses 10 to 16, wherein the pre-training service system maintains independent model access codes and independent model training inference codes for the pre-training model, wherein the model structure codes and the model access codes are encrypted and maintained by the pre-training service system, and the model training inference codes is maintained in plaintext by the pre-training service system.
18. A computer readable medium that stores a set of instructions that is executable by one or more processors of an apparatus to cause the apparatus to initiate a method for performing a service providing method based on a pre-training service system, wherein the pre-training service system comprises a producer service module, an optimizer service module, and a consumer service module; and the method comprises: acquiring identity information of a target user accessing the pre-training service system, to determine a preset user type to which the target user belongs; and opening a service module matching the preset user type to which the target user belongs to the target user, wherein: when the target user is a model producer, the producer service module is opened to the target user, wherein the producer service module is configured to provide the model producer with a model pre-training process for a pre-training dataset, and produce a corresponding pre-training model; when the target user is a model optimizer, the optimizer service module is opened to the target user, wherein the optimizer service module is configured to optimize the pre-training model according to a fine-tuning dataset provided by the model optimizer, and obtain an optimized model; and when the target user is a model consumer, the consumer service module is opened to the target user, wherein the consumer service module is configured to provide the model consumer with a service interface for the pre-training model or the optimized model, and the pre-training model or the optimized model is configured to perform inference on data provided by the model consumer and output a model prediction result.
19. The computer readable medium according to clause 18, wherein the model pre-training process comprises performing training according to the pre-training dataset to obtain a general pre-training model, the pre-training model comprising at least one of the general pre-training model or a dedicated pre-training model, wherein the dedicated pre-training model is generated by the producer service module according to the general pre-training model and that corresponds to a downstream task instructed by the model producer, and the method further comprises: generating a code development template corresponding to the dedicated pre-training model; and providing the code development template to the model optimizer; and modifying model structure codes and/or model parameters of the dedicated pre-training model according to a model modification instruction issued by the model optimizer.
20. The computer readable medium according to clause 18 or 19, wherein the method further comprises: deploying the pre-training model or the optimized model on a device corresponding to the model consumer through the service interface, for performing offline inference on the data provided by the model consumer; or acquiring, through the service interface, the data provided by the model consumer, and invoking the pre-training model or the optimized model to perform online inference.
21. A computer readable medium that stores a set of instructions that is executable by one or more processors of an apparatus to cause the apparatus to initiate a method for performing a service providing method based on a pre-training service system according to any of clauses 1 to 17.

## Claims

1. A system for providing pre-training service comprising:
a producer service module configured to provide a model producer with a model pre-training process for a pre-training dataset and generate a corresponding pre-training model;
an optimizer service module configured to optimize the pre-training model according to a fine-tuning dataset provided by a model optimizer and obtain an optimized model; and
a consumer service module configured to provide a model consumer with a service interface for the pre-training model or the optimized model, wherein the pre-training model or the optimized model is respectively configured to perform inference on data provided by the model consumer and output a model prediction result.

2. The system according to claim 1, wherein:
the model pre-training process is configured to perform training according to the pre-training dataset to obtain a general pre-training model;
the pre-training model comprises at least one of the general pre-training model or a dedicated pre-training model;
the dedicated pre-training model is generated by the producer service module according to the general pre-training model and corresponds to a downstream task instructed by the model producer.

3. The system according to claim 2, wherein:
the producer service module is configured to generate a code development template corresponding to the dedicated pre-training model; and
the optimizer service module is configured to:
provide the code development template to the model optimizer; and
modify model structure codes and/or model parameters of the dedicated pre-training model according to a model modification instruction issued by the model optimizer.

4. The system according to any of claims 1 to 3, wherein the consumer service module is configured to:
deploy the pre-training model or the optimized model on a device corresponding to the model consumer through the service interface, for performing offline inference on the data provided by the model consumer; or
acquire, through the service interface, the data provided by the model consumer, and invoke the pre-training model or the optimized model to perform online inference.

5. The system according to any of claims 1 to 4, wherein a model maintained by the pre-training service system comprises obfuscated model structure codes and obfuscated model parameters, the obfuscated model structure codes and the obfuscated model parameters being pre-generated after associated obfuscation processing is performed on original model structure codes and original model parameters.

6. The system according to claim 5, wherein the associated obfuscation processing comprises:
performing forward obfuscation processing on at least a part of codes in the original model structure codes; and
performing reverse obfuscation processing on model parameters related to the at least a part of codes in the original model parameters.

7. The system according to claim 5 or 6, wherein the obfuscated model parameters are stored in a storage space managed by the pre-training service system.

8. The system according to any of claims 5 to 7, wherein
the optimizer service module is configured to:
identify whether the model optimizer has a permission to invoke the obfuscated model parameters corresponding to the pre-training model, and
if the model optimizer has the permission to invoke the obfuscated model parameters, combine the obfuscated model parameters with the obfuscated model structure codes to acquire the pre-training model, and provide the pre-training model to the model optimizer; and/or
the consumer service module is configured to:
identify whether the model consumer has a permission to invoke the obfuscated model parameters corresponding to the pre-training model or the optimized model, and
if the model consumer has the permission to invoke the obfuscated model parameters, combine the obfuscated model parameters with the obfuscated model structure codes to acquire the pre-training model or the optimized model, and provide the pre-training model or the optimized model to the model consumer respectively.

9. The system according to any of claims 1 to 8, wherein the pre-training service system is configured to maintain independent model access codes and independent model training inference codes for the pre-training model or the optimized model, wherein the model structure code and the model access codes are encrypted and maintained by the pre-training service system, and the model training inference code is maintained in plaintext by the pre-training service system.

10. A service providing method based on a pre-training service system, the method comprising:
acquiring identity information of a target user accessing the pre-training service system, to determine a preset user type to which the target user belongs, the pre-training service system comprising a producer service module, an optimizer service module, and a consumer service module; and
opening a service module matching the preset user type to which the target user belongs to the target user, wherein:
when the target user is a model producer, the producer service module is opened to the target user, wherein the producer service module is configured to provide the model producer with a model pre-training process for a pre-training dataset, and produce a corresponding pre-training model;
when the target user is a model optimizer, the optimizer service module is opened to the target user, wherein the optimizer service module is configured to optimize the pre-training model according to a fine-tuning dataset provided by the model optimizer, and obtain an optimized model; and
when the target user is a model consumer, the consumer service module is opened to the target user, wherein the consumer service module is configured to provide the model consumer with a service interface for the pre-training model or the optimized model, and the pre-training model or the optimized model is configured to perform inference on data provided by the model consumer and output a model prediction result.

11. The method according to claim 10, wherein the model pre-training process comprises performing training according to the pre-training dataset to obtain a general pre-training model, the pre-training model comprising at least one of the general pre-training model or a dedicated pre-training model, wherein the dedicated pre-training model is generated by the producer service module according to the general pre-training model and that corresponds to a downstream task instructed by the model producer, the method comprising:
generating a code development template corresponding to the dedicated pre-training model;
providing the code development template to the model optimizer; and
modifying model structure codes and/or model parameters of the dedicated pre-training model according to a model modification instruction issued by the model optimizer.

12. The method according to claim 10 or 11, wherein:
a model maintained by the pre-training service system comprises obfuscated model structure codes and obfuscated model parameters, the obfuscated model structure codes and the obfuscated model parameters being pre-generated after associated obfuscation processing is performed on original model structure codes and original model parameters; and
the associated obfuscation processing comprises:
performing forward obfuscation processing on at least a part of codes in the original model structure codes, and
performing reverse obfuscation processing on model parameters related to the at least a part of codes in the original model parameters.

13. The method according to claim 12, wherein the obfuscated model parameters are stored in a storage space managed by the pre-training service system, the method comprising:
identifying whether the model optimizer has a permission to invoke the obfuscated model parameters corresponding to the pre-training model, and if the model optimizer has the permission to invoke the obfuscated model parameters, combining the obfuscated model parameters with the obfuscated model structure codes to acquire the pre-training model, and providing the pre-training model to the model optimizer; and/or
identifying whether the model consumer has a permission to invoke the obfuscated model parameters corresponding to the pre-training model or the optimized model, and if the model consumer has the permission to invoke the obfuscated model parameters, combining the obfuscated model parameters with the obfuscated model structure codes to acquire the pre-training model or the optimized model, and providing the pre-training model or the optimized model to the model consumer.

14. The method according to any of claims 10 to 13, wherein the pre-training service system maintains independent model access codes and independent model training inference codes for the pre-training model, wherein the model structure codes and the model access codes are encrypted and maintained by the pre-training service system, and the model training inference codes is maintained in plaintext by the pre-training service system.

15. A computer readable medium that stores a set of instructions that is executable by one or more processors of an apparatus to cause the apparatus to initiate the method for performing a service providing method according to any of claims 10 to 14 based on a pre-training service system comprising a producer service module, an optimizer service module, and a consumer service module
